# EUROPEAN PATENT APPLICATION

(11) **EP 4 650 899 A1**
(43) Date of publication of application: **19.11.2025**
(21) Application number: 23915849.6
(22) Date of filing: 29.12.2023
(51) Int. Cl.: G05D 1/00, A47L 11/24

(54) **MOVABLE APPARATUS CONTROL METHOD, APPARATUS, DEVICE, AND MEDIUM**

(30) Priority: 12.01.2023 CN 202310063701
(71) Applicant: Beijing Roborock Innovation Technology Co., Ltd., Beijing 102206 (CN)
(72) Inventor: HOU, Zhengtao, Beijing 102200 (CN)
(74) Representative: Haseltine Lake Kempner LLP
(86) International application number: PCT/CN2023/143334
(87) International publication number: WO 2024/149096

(57) **Abstract**

A movable apparatus control method, an apparatus, a device, and a medium. A light emitting unit (1) and a light receiving unit (2) are provided at the front end of a movable apparatus, wherein the distance between the light emitting unit (1) and the bottom surface of the movable apparatus is greater than the distance between the light receiving unit (2) and the bottom surface. The control method comprises: in a traveling process of the movable apparatus, the light receiving unit (2) monitoring a light point cloud formed by light emitted by the light emitting unit (1), wherein the light point cloud is a point cloud formed when a light beam emitted by the light emitting unit (1) in a preset direction is irradiated onto an obstacle, and the preset direction is a downward direction pointing to a place ahead the movable apparatus (S201); and if the light point cloud meets a preset condition, controlling the movable apparatus to decelerate, the preset condition comprising light point cloud missing (S202).

## Description

### CROSS-REFERENCE TO RELATED APPLICATION

This application claims priority to the Chinese patent application filed on January 12, 2023, with application number 202310063701.9, the entire content of which is incorporated herein by reference.

### TECHNICAL FIELD

The present disclosure belongs to the technical field of automatic control, and relates to a method for controlling a movable apparatus, an apparatus, a device and a medium.

### BACKGROUND

Movable apparatuses such as floor-cleaning robots and delivery robots have been widely used in both consumer and commercial fields. Movement safety remains a critical factor determining their operational lifespan and user satisfaction.

However, existing movable apparatuses frequently suffer from cliff-related accidents despite being equipped with cliff sensors. Their movement inertia often prevents timely braking, resulting in falling and damage.

Consequently, there is an urgent need for solutions that can ensure the travel safety of movable apparatuses.

### SUMMARY

According to a first aspect of the present disclosure, a method for controlling a movable apparatus is provided, wherein a light emitting unit and a light receiving unit are disposed at a front end of the movable apparatus, and a distance between the light emitting unit and a bottom surface of the movable apparatus is greater than a distance between the light receiving unit and the bottom surface, and the method includes: during movement of the movable apparatus, monitoring, by the light receiving unit, a light point cloud formed by light emitted by the light emitting unit, the light point cloud being a point cloud formed when a light beam emitted by the light emitting unit in a preset direction irradiates an obstacle, and the preset direction being a direction toward the front of the movable apparatus and facing downward; and if the light point cloud satisfies a preset condition, controlling the movable apparatus to decelerate, the preset condition including the light point cloud being missing.

According to a second aspect of the present disclosure, a movable apparatus is provided, wherein a light emitting unit and a light receiving unit are disposed at a front end of the movable apparatus, and a distance between the light emitting unit and a bottom surface of the movable apparatus is greater than a distance between the light receiving unit and the bottom surface, and the movable apparatus further includes: a processing unit configured to monitor, through the light receiving unit, a light point cloud formed by light emitted by the light emitting unit during movement of the movable apparatus, the light point cloud being a point cloud formed when a light beam emitted by the light emitting unit in a preset direction irradiates an obstacle, and the preset direction being a direction toward the front of the movable apparatus and facing downward; and a deceleration unit configured to control the movable apparatus to decelerate if the light point cloud meets a preset condition, the preset condition including the light point cloud being missing.

According to a third aspect of the present disclosure, an electronic device is provided including a memory and one or more programs, wherein the one or more programs are stored in the memory and are configured to be executed by one or more processors to execute operation instructions corresponding to the method described in the first aspect contained in the one or more programs.

According to a fourth aspect of the present disclosure, a computer-readable storage medium is provided in which a computer program is stored. When the program is executed by a processor, the processor is caused to implement steps corresponding to the method described in the first aspect.

### BRIEF DESCRIPTION OF THE DRAWINGS

In order to illustrate the technical solutions of the embodiments according to the present disclosure more clearly, a brief introduction may be given hereinafter to the drawings that may be used in the description of the embodiments. Apparently, the drawings in the description below are merely for illustrating some embodiments of the present disclosure, and other drawings may be obtained by those skilled in the art according to these drawings without paying any creative labor.
FIG. 1 is a schematic diagram of a movable apparatus according to some embodiments of the present disclosure;
FIG. 2 is a schematic flow chart of a method for controlling a movable apparatus according to some embodiments of the present disclosure;
FIG. 3 is a schematic diagram of single-beam laser emitted by the light emitting unit in FIG. 1;
FIG. 4 is a schematic diagram showing a movable apparatus in FIG. 1 performing cliff recognition;
FIG. 5 is another schematic diagram showing a movable apparatus in FIG. 1 performing cliff recognition;
FIG. 6 is a schematic diagram of a movable apparatus according to some embodiments of the present disclosure; and
FIG. 7 is a schematic diagram of an electronic device according to some embodiments of the present disclosure.

### DETAILED DESCRIPTION

In order to better understand the above technical solutions, the above technical solutions will be described in detail below in conjunction with the accompanying drawings of the specification as well as specific embodiments. It should be understood that the embodiments of the present disclosure and the specific features in the embodiments are a detailed description of the technical solutions of the present disclosure, rather than a limitation of the technical solutions of the present disclosure, and that the embodiments of the present disclosure and the technical features in the embodiments can be combined with each other in the absence of conflict.

First, it should be understood that the term "and/or" as used herein describes only an association relationship between associated objects, indicating three types of possible relationships. For example, A and/or B may indicate the following three cases: A exists alone; both A and B exist; or B exists alone. In addition, the character "/" herein generally indicates an "or" relationship between preceding and following associated objects.

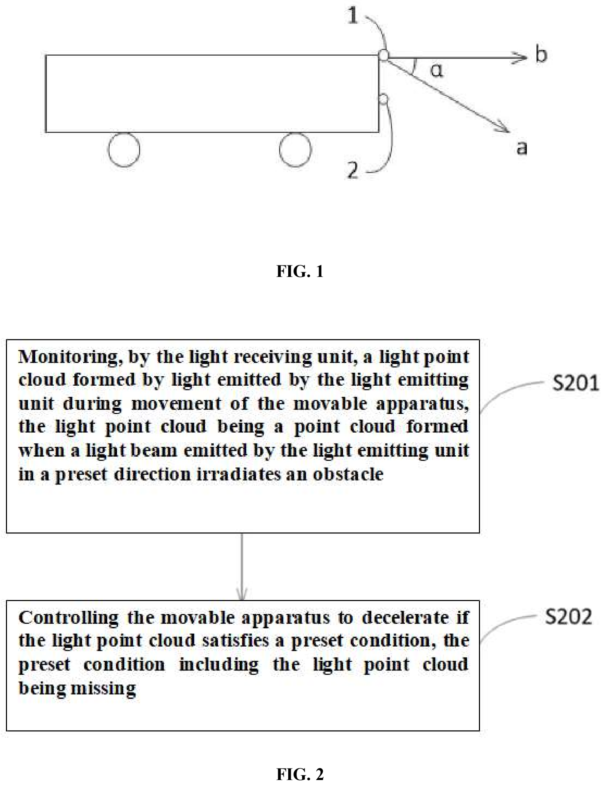

In an embodiment of the present disclosure, a method for controlling a movable apparatus is provided. As shown in FIG. 1, a light emitting unit 1 and a light receiving unit 2 may be disposed at a front end of the movable apparatus involved with the control method. A distance between the light emitting unit 1 and a bottom surface of the movable apparatus is greater than a distance between the light receiving unit 2 and the bottom surface. The light emitting unit 1 emits a light beam in a preset direction a, and the preset direction a is a direction toward the front of the movable apparatus (a preset moving direction when the movable apparatus moves forward) and facing downward. It can also be said that the preset direction a faces downward relative to front b of the movable apparatus, and an angle between the preset direction a and the front b of the movable apparatus is an acute angle α.

It should be noted that the movable apparatus may be a sweeping robot, a transport robot, an automatic driving device, etc., which is not limited here. The light emitting unit 1 may be a laser emitting unit, or an infrared light emitting unit, etc., which is not limited here. The light receiving unit 2 may be a light sensor, or a camera, etc., which is not limited here.

As shown in FIG. 2, the method for controlling a movable apparatus according to an embodiment of the present disclosure may include the following steps.

In step S201, during movement of the movable apparatus, the light receiving unit 2 monitors a light point cloud formed by light emitted by the light emitting unit 1, the light point cloud being a point cloud formed when a light beam emitted by the light emitting unit 1 in a preset direction a irradiates an obstacle.

In step S202, if the light point cloud meets a preset condition, the movable apparatus is controlled to decelerate, the preset condition including the light point cloud being missing.

The method for controlling a movable apparatus can be applied to a controller integrated in the movable apparatus, or to an independent control device, or to the cloud end, which is not limited here.

The implementation steps of the method for controlling a movable apparatus according to the present disclosure are described in detail below with reference to FIGS. 1 to 5.

In step S201, during movement of the movable apparatus, the light receiving unit 2 monitors a light point cloud formed by light emitted by the light emitting unit 1, the light point cloud being a point cloud formed when a light beam emitted by the light emitting unit 1 in a preset direction a irradiates an obstacle.

When the light beam emitted by the light emitting unit 1 irradiates an obstacle such as the ground or other barrier, a light point cloud is formed on a surface of the obstacle. The light receiving unit 2 can monitor the light point cloud by detecting reflected light of the light point cloud.

In some embodiments, when the light emitting unit 1 is a laser emitting unit, since the emitted laser beam has stronger penetrating capability than visible light and a light point cloud formed by a dense laser beam is easier to identify, the accuracy of the light receiving unit 2 in monitoring the light point cloud can be guaranteed.

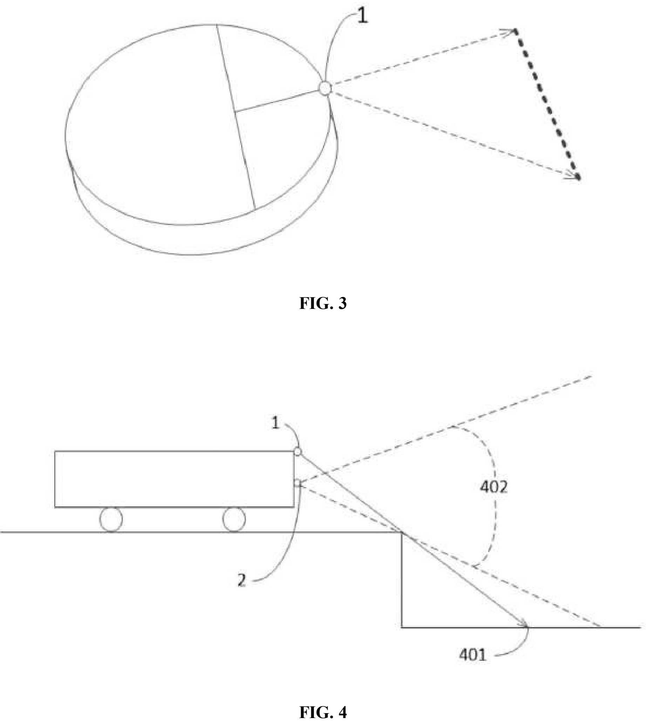

In some embodiments, when the light emitting unit 1 is a laser emitting unit, the light emitted by the light emitting unit 1 may also be set to be a single-beam laser. As shown in FIG. 3, the single-beam laser may be a line-segment laser, that is, the light beam emitted by the light emitting unit 1 is a row of light arranged in a line segment shape. When the single-beam laser irradiates an obstacle, if the obstacle has a plane shape, a straight-line-segment-shaped light point cloud as shown in FIG. 3 will be formed; if the obstacle has a concave-convex surface, an irregular line-shaped light point cloud will be formed. The use of the single-beam laser can significantly reduce the amount of calculation required for subsequent determination of whether the light point cloud is missing, thereby reducing resource consumption. Of course, the light emitted by the light emitting unit 1 may also be a double-beam laser or a cluster-shaped laser, which is not limited here.

In step S202, if the light point cloud meets a preset condition, the movable apparatus is controlled to decelerate, the preset condition including the light point cloud being missing.

As shown in FIG. 4, since the distance between the light emitting unit 1 and the bottom surface of the movable apparatus is greater than the distance between the light receiving unit 2 and the bottom surface, the light emitting unit 1 is located above the light receiving unit 2 during movement of the movable apparatus. In this way, when a cliff appears in front, part of the light emitted by the light emitting unit 1 will irradiate a part below the cliff, and since the light receiving unit 2 is located lower than the light emitting unit 1, the light point cloud formed by the light emitted by the light emitting unit 1 under the cliff is blocked by the cliff and cannot be reflected to the light receiving unit 2. As shown in FIG. 4, the light point cloud 401 formed by the light emitted by the light emitting unit 1 under the cliff is not within a field of view 402 of the light receiving unit 2, so the light point cloud monitored by the light receiving unit 2 will be missing.

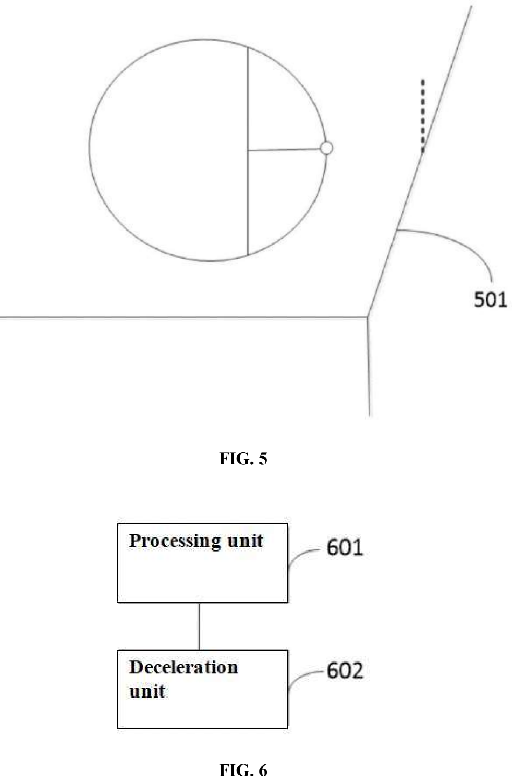

The situation of the light point cloud being missing varies according to the location of the cliff. One side of the light point cloud may be missing, the middle of the light point cloud may be missing, or the whole light point cloud may be missing. As shown in FIG. 5, a solid line 501 is an edge of the cliff. The cliff appears in the right front of the movable apparatus. The light emitted by the light emitting unit partially irradiates the part below the cliff, and the light receiving unit detects that a right part of the light point cloud is missing.

In some embodiments, the preset condition may also be a missing duration of the light point cloud reaching a preset duration. That is, only when the light point cloud is missing and the missing duration lasts for a period of time, will it be considered that there is a cliff ahead, so as to avoid misjudging the short-term missing light point cloud caused by small potholes or small obstacles in the path as the missing light point cloud caused by a cliff.

In some embodiments, when it is determined that the light point cloud meets the preset condition and the movable apparatus needs to be controlled to decelerate, there may be a variety of deceleration schemes, three of which are listed below as examples.

A first scheme is to pre-set a speed or speed range after deceleration. In some embodiments, the movable apparatus can be controlled to decelerate to a speed less than 0.1 m/s, so that the movable apparatus can be stopped in time and parked stably if braking is required later, or the moving speed can be quickly restored if continued moving is required later.

A second scheme is to control the movable apparatus to decelerate to a preset speed, which is negatively correlated with a preset angle of the light emitting unit 1. The preset angle is the angle α between the front b of the movable apparatus and the preset direction a as shown in FIG. 1. Since the larger the preset angle α, the closer the light point cloud formed by the light emitted by the light emitting unit 1 after reaching the ground is to the movable apparatus, the closer the distance between the movable apparatus and the cliff is when the cliff is detected, and a greater intensity of deceleration is required at this time; that is, deceleration to a lower speed is required at this time to ensure safety.

A third scheme is to set the deceleration intensity according to the current moving speed. In some embodiments, if the current moving speed is 1 m/s, the current moving speed is reduced to 0.1 m/s; if the current moving speed is 3 m/s, the current moving speed is reduced to 0.3 m/s.

When the light point cloud is missing, controlling the movable apparatus to decelerate in advance can prevent the movable apparatus from falling off due to inertia when braking upon approaching a cliff. Of course, the schemes for controlling the deceleration of the movable apparatus are not limited to the above three, and are not limited here, nor are they listed in an exhaustive manner.

After the movable apparatus is controlled to decelerate, different follow-up measures may be taken according to different situations.

In some embodiments, if the light receiving unit 2 detects that the light point cloud is restored to a complete state after deceleration, it may be that the apparatus has passed the cliff and reached a safe location, or it may be a misjudgment caused by uneven road surface, so the movable apparatus may be controlled to resume the moving speed. At this time, since the movable apparatus only decelerates in advance but does not stop, it can quickly resume its speed.

In other embodiments, a cliff sensor is disposed on the movable apparatus, and the cliff sensor may be a touch sensor installed on a roller. If the touch sensor detects that the roller is suspended in the air, it is determined that there is a cliff. The cliff sensor may also be a distance sensor. If the distance sensor detects that a suspension in the air appears in the front, it is determined that there is a cliff in front. If the cliff sensor detects that there is a cliff in front of the movable apparatus after deceleration, the movable apparatus is controlled to stop moving. At this time, since the deceleration has been carried out in advance, the movable apparatus can be stopped quickly to avoid falling off due to inertia.

In other embodiments, if after deceleration, the light receiving unit 2 detects that the light point cloud completely disappears for a preset duration, it is determined that the cliff is very close, and the movable apparatus can be controlled to stop moving. At this time, since the deceleration has been carried out in advance, the movable apparatus can be stopped quickly to avoid falling off due to inertia.

Of course, according to different scenarios and in conjunction with different sensors, the measures that can be taken after controlling the movable apparatus to decelerate are not limited to the above examples and are not limited here.

It should also be noted that the movable apparatus is often pre-set with a front (the direction of advancement), and its front end is an end facing forward. The light emitting unit 1 and the light receiving unit 2 are disposed at the front end of the movable apparatus in the manner shown in FIG. 1, and the method for controlling a movable apparatus according to the embodiment of the present disclosure can be used to decelerate in time before advancing to a cliff, so as to avoid falling off due to unpunctual braking after the cliff sensor detects a cliff. However, if it is considered that cliff protection is also required when the movable apparatus retreats or moves sideways, the light emitting unit 1 and the light receiving unit 2 can be disposed at a rear end or side end of the movable apparatus as needed, and the method for controlling a movable apparatus according to this embodiment can be used to achieve early deceleration before the cliff, further ensuring all-round movement safety.

Based on the same idea, embodiments of the present disclosure provide a movable apparatus. As shown in FIG. 1, the front end of the movable apparatus is provided with a light emitting unit 1 and a light receiving unit 2, and a distance between the light emitting unit 1 and a bottom surface of the movable apparatus is greater than a distance between the light receiving unit 2 and the bottom surface. As shown in FIG. 6, the movable apparatus can also include: a processing unit 601 configured to: monitor, by the light receiving unit 2, a light point cloud formed by light emitted by the light emitting unit 1 during movement of the movable apparatus, the light point cloud being a point cloud formed when a light beam emitted by the light emitting unit 1 in a preset direction irradiates an obstacle, and the preset direction being a direction toward the front of the movable apparatus and facing downward; and a deceleration unit 602 configured to control the movable apparatus to decelerate if the light point cloud satisfies a preset condition, the preset condition including the light point cloud being missing.

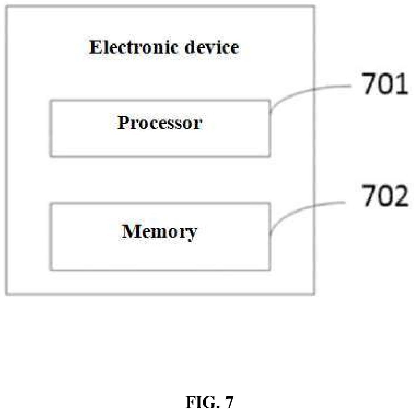

Based on the same idea, embodiments of the present disclosure provide an electronic device as shown in FIG. 7, comprising a memory 702, and one or more programs, wherein the one or more programs are stored in the memory 702 and are configured to execute, by one or more processors 701, the operation instructions contained in said one or more programs that are used to carry out the control method for a movable apparatus provided in this disclosure.

Based on the same idea, embodiments of the present disclosure provide a computer-readable storage medium having stored therein a computer program that, when executed by a processor, prompts the processor to carry out the steps corresponding to the control method for a movable apparatus according to the present disclosure.

Since the apparatuses, devices and media described in this embodiment are the apparatuses, devices and media used to implement control method for a movable apparatus according to the present disclosure, based on the control method for a movable apparatus described in the embodiments of the present disclosure, a person skilled in the art will be able to understand the specific implementation of the apparatuses, devices and media of the present embodiment as well as the various forms of variations thereof, and therefore, no detailed description will be given herein as to how the apparatuses, devices and media implement the method in the embodiments of the present disclosure. As long as a person skilled in the art implements the apparatuses, devices and media used to implement the control method for a movable apparatus in the embodiments of the present disclosure, they all fall within the scope of the present disclosure intended to be protected.

It should be appreciated by those skilled in the art that, the embodiments of the present disclosure may be provided as methods, systems or computer program products. Therefore, hardware embodiments, software embodiments or a combination thereof may be adopted in the present disclosure. In addition, the present disclosure can adopt one or more computer program products that may be implemented by computer storage media (including but not limited to a magnetic disk storage, a CD-ROM, an optical storage, etc.) including computer program codes.

The present disclosure is described with reference to the flowcharts and/or block diagrams showing the method, device (system), and a computer product according to the embodiments of the present disclosure. It should be appreciated that each process and/or block of the flowchart and/or block diagram and combinations of the processes and/or blocks in the flowchart and/or block diagram may be implemented by computer program instructions. These computer program instructions may be provided to a central processor of a general purpose computer, a special purpose computer, an embedded processor or other programmable data process apparatus to produce a machine, such that a means is produced that implements the functions specified in the one or more processes of the flowcharts and/or the one or more blocks in the block diagram through the instructions executed by the processor of the computer or other programmable data process apparatus.

These computer program instructions may also be stored in a computer-readable memory that can direct a computer or other programmable data process apparatus to function in a particular manner, such that the instructions stored in the computer-readable memory produce a manufactured article including instruction means that implements the functions specified in the one or more processes of the flowcharts and/or the one or more blocks in the block diagram.

These computer program instructions may also be loaded onto a computer or other programmable data process apparatus, making the implementation of a series of steps on the computer or other programmable apparatus to implement the processes by the computer, such that the instructions executed on the computer or other programmable data process apparatus may provide steps that implement the functions specified in the one or more processes of the flowcharts and/or the one or more blocks in the block diagram.

Although preferred embodiments of the present disclosure have been described, those skilled in the art may make additional changes and modifications to these embodiments once the underlying creative concepts are known. Therefore, the appended claims are intended to be construed to include the preferred embodiments as well as all changes and modifications that fall within the scope of the present disclosure.

Apparently, various modifications and variations may be made by those skilled in the art without departing from the spirit and scope of the present disclosure. Thus, if those modifications and variations to the present disclosure belong to the scope of the claims of the present disclosure and its equivalents, it is intended to embrace those modifications and variations in the present disclosure.

An embodiment of the present disclosure provides a method for controlling a movable apparatus. A light emitting unit and a light receiving unit are disposed at a front end of the movable apparatus, and a distance between the light emitting unit and a bottom surface of the movable apparatus is greater than a distance between the light receiving unit and the bottom surface. The method may include: monitoring, by the light receiving unit, a light point cloud formed by light emitted by the light emitting unit during movement of the movable apparatus, the light point cloud being a point cloud formed when a light beam emitted by the light emitting unit in a preset direction irradiates an obstacle, and the preset direction being a direction toward the front of the movable apparatus and facing downward; and controlling the movable apparatus to decelerate if the light point cloud meets a preset condition, the preset condition including the light point cloud being missing.

In some embodiments, the light emitting unit is a laser emitting unit.

In some embodiments, light emitted by the laser emitting unit is a single-beam laser.

In some embodiments, the preset condition includes a missing duration of the light point cloud reaching a preset duration.

In some embodiments, controlling the movable apparatus to decelerate includes: controlling the movable apparatus to decelerate to a speed less than 0.1 m/s.

In some embodiments, controlling the movable apparatus to decelerate includes: controlling the movable apparatus to decelerate to a preset speed, the preset speed being negatively correlated with a preset angle of the light emitting unit, and the preset angle being an included angle between the front of the movable apparatus and the preset direction.

In some embodiments, after controlling the movable apparatus to decelerate, the method further includes: if the light point cloud is restored to be complete, controlling the movable apparatus to resume a moving speed.

In some embodiments, a cliff sensor is disposed on the movable apparatus, and after controlling the movable apparatus to decelerate, the method further includes: if the cliff sensor detects that there is a cliff in front of the movable apparatus, controlling the movable apparatus to stop moving forward.

Another embodiment of the present disclosure provides a movable apparatus. A light emitting unit and a light receiving unit are disposed at a front end of the movable apparatus, and a distance between the light emitting unit and a bottom surface of the movable apparatus is greater than a distance between the light receiving unit and the bottom surface. The movable apparatus may further include: a processing unit configured to monitor, through the light receiving unit, a light point cloud formed by light emitted by the light emitting unit during movement of the movable apparatus, the light point cloud being a point cloud formed when a light beam emitted by the light emitting unit in a preset direction irradiates an obstacle, and the preset direction being a direction toward the front of the movable apparatus and facing downward; and a deceleration unit configured to control the movable apparatus to decelerate if the light point cloud meets a preset condition, the preset condition including the light point cloud being missing.

Another embodiment of the present disclosure provides an electronic device, including a memory and one or more programs, wherein the one or more programs are stored in the memory and are configured to be executed by one or more processors to execute operation instructions corresponding to the one or more programs for performing the above-mentioned method for controlling a movable apparatus.

Yet another embodiment of the present disclosure provides a computer-readable storage medium having a computer program stored therein. When the program is executed by a processor, the processor is prompted to implement steps corresponding to the above-mentioned method for controlling a movable apparatus.

## Claims

1. A method for controlling a movable apparatus, wherein a light emitting unit and a light receiving unit are disposed at a front end of the movable apparatus, and a distance between the light emitting unit and a bottom surface of the movable apparatus is greater than a distance between the light receiving unit and the bottom surface, the method comprising:
monitoring, by the light receiving unit, a light point cloud formed by light emitted by the light emitting unit during movement of the movable apparatus, the light point cloud being a point cloud formed when a light beam emitted by the light emitting unit in a preset direction irradiates an obstacle, and the preset direction being a direction toward a front of the movable apparatus and facing downward; and
controlling the movable apparatus to decelerate if the light point cloud satisfies a preset condition, the preset condition including the light point cloud being missing.

2. The control method according to claim 1, wherein the light emitting unit is a laser emitting unit.

3. The control method according to claim 2, wherein light emitted by the laser emitting unit is a single-beam laser.

4. The control method according to claim 1, wherein the preset condition further comprises:
a missing duration of the light point cloud reaching a preset duration.

5. The control method according to claim 1, wherein controlling the movable apparatus to decelerate comprises:
controlling the movable apparatus to decelerate to a speed less than 0.1 m/s.

6. The control method according to claim 1, wherein controlling the movable apparatus to decelerate comprises:
controlling the movable apparatus to decelerate to a preset speed, the preset speed being negatively correlated with a preset angle of the light emitting unit, and the preset angle being an included angle between the front of the movable apparatus and the preset direction.

7. The control method according to any one of claims 1 to 6, wherein after controlling the movable apparatus to decelerate, further comprises:
if the light point cloud is restored to be complete, controlling the movable apparatus to restore a moving speed.

8. The control method according to any one of claims 1 to 6, wherein the movable apparatus is provided with a cliff sensor, and after controlling the movable apparatus to decelerate, the method further comprises:
if the cliff sensor detects that there is a cliff in front of the movable apparatus, controlling the movable apparatus to stop moving forward.

9. A movable apparatus, wherein a light emitting unit and a light receiving unit are disposed at a front end of the movable apparatus, a distance between the light emitting unit and a bottom surface of the movable apparatus is greater than a distance between the light receiving unit and the bottom surface, and the movable apparatus further comprises:
a processing unit configured to monitor, through the light receiving unit, a light point cloud formed by light emitted by the light emitting unit during movement of the movable apparatus, the light point cloud being a point cloud formed when a light beam emitted by the light emitting unit in a preset direction irradiates an obstacle, and the preset direction being a direction toward the front of the movable apparatus and facing downward; and
a deceleration unit configured to control the movable apparatus to decelerate if the light point cloud meets a preset condition, the preset condition comprising the light point cloud being missing.

10. An electronic device comprising a memory and one or more programs, wherein the one or more programs are stored in the memory and configured to be executed by one or more processors to execute operation instructions corresponding to the method according to any one of claims 1 to 8 contained in the one or more programs.

11. A computer-readable storage medium having a computer program stored therein, wherein when the program is executed by a processor, steps corresponding to the method according to any one of claims 1 to 8 are implemented.
